# FASCICULE DE BREVET EUROPEEN

(11) **EP 1 653 051 B1**
(45) Date de publication et mention de la délivrance du brevet: **08.08.2012**
(21) Numéro de dépôt: 05109920.8
(22) Date de dépôt: 24.10.2005
(51) Int. Cl.: F01D 21/04, F16B 35/04, F16B 31/02

(54) **Turbomachine avec un dispositif de découplage, dispositif de découplage et vis fusible pour le dispositif de découplage**
Turbomaschine mit Entkopplungsvorrichtung, Entkopplungsvorrichtung und Abreissschraube
Turbomachine with decoupling device, decoupling device and shearable bolt

(30) Priorité: 26.10.2004 FR 0452444
(43) Date de publication de la demande: 03.05.2006
(73) Titulaire: SNECMA, 75015 Paris (FR)
(72) Inventeur: Bouchy, Gaël, 77540, La Chapelle Iger (FR); Servant, Régis, Eugène, Henri, 91270, Vigneux Sur Seine (FR)
(74) Mandataire: David, Daniel

(56) Documents cités:
- FR-A- 2 473 938
- FR-A- 2 752 024
- FR-A- 2 831 624
- US-A- 4 114 961
- US-A- 4 501 362
- US-A- 4 502 738
- US-A- 5 417 501

## Description

L'invention concerne une turbomachine avec un dispositif de découplage, un dispositif de découplage pour la turbomachine et une vis fusible pour le dispositif de découplage de la turbomachine.

Un turboréacteur comprend, d'amont en aval dans le sens de l'écoulement des gaz, une soufflante, un ou plusieurs étages de compresseurs, une chambre de combustion, un ou plusieurs étages de turbines et une tuyère d'échappement des gaz. La soufflante comporte un rotor pourvu d'aubes à sa périphérie qui, lorsqu'elles sont mises en rotation, entraînent l'air dans le turboréacteur. Le rotor de soufflante est supporté par un arbre d'entraînement, qui est centré sur l'axe du turboréacteur par une série de paliers, supportés par des pièces de support reliées à la structure fixe du turboréacteur.

Il peut se produire, accidentellement, la rupture d'une aube de soufflante. Il s'ensuit un balourd important sur l'arbre d'entraînement de la soufflante, qui entraîne des charges et des vibrations sur les paliers, transmises par leurs pièces de support à la structure fixe du turboréacteur, qui doit être dimensionnée en conséquence.

Afin de pouvoir dimensionner la structure du turboréacteur de façon moins lourde et moins coûteuse, l'art antérieur enseigne, comme par exemple dans les brevets FR 2, 831, 624 et FR 2, 752, 024, de prévoir un système de découplage d'un ou plusieurs paliers. La pièce de support d'un palier est fixée à la structure du turboréacteur par des vis dites fusibles, comportant une portion affaiblie entraînant leur rupture en cas d'efforts de traction trop importants. Ainsi, à l'apparition d'un balourd sur l'arbre d'entraînement, les efforts de balourd sont convertis, au niveau des vis fusibles, en efforts longitudinaux par la pièce de support du palier. Si les efforts atteignent un seuil déterminé, les vis fusibles cassent, découplant la pièce de support du premier palier de la structure du turboréacteur, à laquelle ne sont plus transmis les efforts du balourd par la pièce support de palier.

De telles vis fusibles comprennent une tête et une tige, avec une portion filetée, afin d'être fixée à l'aide d'un écrou, et une portion amincie calibrée, formant la partie "fusible" de la vis, agencée entre la tête et la portion filetée. La vis permet la fixation d'au moins deux pièces ; au montage, la tête est mise en appui sur une première pièce et un écrou est vissé contre la deuxième pièce.

La calibration de la résistance de la zone fusible de la vis doit être très précise, afin que la vis ne casse pas en fonctionnement normal et casse de façon certaine en cas d'efforts prédéfinis. Le serrage de l'écrou pouvant introduire un couple de torsion dans la vis, l'extrémité de la vis opposée à la tête comporte une empreinte, permettant l'insertion d'une clé par l'opérateur afin de reprendre le couple de serrage.

Toutefois, il s'avère que les clés, logées dans l'empreinte de la tige de la vis, se déforment considérablement lors du serrage, parfois jusqu'à la rupture. Or, il est impossible de prévoir des clés plus grandes, puisque les dimensions de l'empreinte sont limitées par le diamètre de la tige.

En outre, l'expérience prouve que les opérateurs ont tendance, non pas à se contenter de bloquer la tige en rotation, mais à exercer un serrage de la vis en agissant sur les deux clés à la fois, à savoir la clé insérée en bout de tige et la clé de serrage de l'écrou. La calibration du couple de serrage n'est plus alors respectée. Or, un couple de serrage trop important tend à déformer plastiquement la vis, ce qui fausse la calibration de sa portion fusible, tandis qu'un couple de serrage trop faible peut se traduire par des ruptures non maîtrisées de la vis.

Enfin, le couple de torsion introduit par le serrage de l'écrou se propage dans la vis, d'une part vers l'extrémité filetée dans laquelle la clé est insérée, d'autre part vers la tête. Le couple de torsion se propageant vers la tête se propage notamment dans la partie fusible de la vis, ce qui est de nouveau préjudiciable à sa calibration.

La présente invention vise à pallier ces inconvénients.

A cet effet, l'invention concerne une turbomachine, comprenant un rotor avec au moins un palier, monté sur une pièce support de palier, ladite pièce étant reliée à la structure fixe par un dispositif de découplage, comportant au moins une vis fusible, traversant au moins un alésage, ladite vis comprenant une tête et une portion filetée, une portion fusible formant une zone privilégiée de rupture, située entre la tête de la vis et sa portion filetée, caractérisée par le fait que ladite vis comprend, entre sa portion filetée et sa portion fusible, une portion de blocage de la vis en rotation coopérant avec une portion de blocage complémentaire ménagée dans alésage.

Grâce à l'invention, la vis est bloquée en rotation par sa portion de blocage en rotation. Il n'est donc plus nécessaire d'utiliser une clé coopérant avec une empreinte de sa tige. En outre, le couple de torsion exercé sur la vis lors du serrage de l'écrou est repris par la portion de blocage en rotation et transmis à la pièce comportant la portion de blocage complémentaire ; le couple n'est donc pas transmis à la portion fusible qui reste correctement calibrée.

L'invention concerne également un dispositif de découplage entre une pièce support de palier et la structure fixe d'une turbomachine, qui comprend un rotor avec au moins un palier monté sur ladite pièce support de palier, le dispositif comprenant au moins une vis fusible, traversant au moins un alésage, ladite vis comprenant une tête et une portion filetée, une portion fusible formant une zone privilégiée de rupture, située entre la tête de la vis et sa portion filetée, caractérisée par le fait que ladite vis comprend, entre sa portion filetée et sa portion fusible, une portion de blocage de la vis en rotation coopérant avec une portion de blocage complémentaire ménagée dans l'alésage.

L'invention concerne également une vis fusible pour un dispositif de découplage entre une pièce support de palier et la structure fixe d'une turbomachine, qui comprend un rotor avec au moins un palier monté sur ladite pièce support de palier, la vis traversant au moins un alésage et comprenant une tête et une portion filetée, une portion fusible formant une zone privilégiée de rupture, située entre la tête de la vis et sa portion filetée, caractérisée par le fait qu'elle comprend, entre sa portion filetée et sa portion fusible, une portion de blocage en rotation agencée pour coopérer avec une portion de blocage complémentaire ménagée dans l'alésage.

L'invention sera mieux comprise à l'aide de la description suivante du turboréacteur et de la vis fusible de l'invention, en référence aux planches annexées, sur lesquelles :
- la figure 1 représente une vue en coupe axiale schématique du turboréacteur de l'invention ;
- la figure 2 représente une vue en perspective schématique d'une première forme de réalisation de la vis fusible de l'invention, qui est la vis des figures 1 et 9 ;
- la figure 3 représente une vue en perspective schématique d'une deuxième forme de réalisation de la vis fusible de l'invention ;
- la figure 4 représente une vue en perspective schématique d'une troisième forme de réalisation de la vis fusible de l'invention ;
- la figure 5 représente une vue en perspective schématique d'une quatrième forme de réalisation de la vis fusible de l'invention ;
- la figure 6 représente une vue en perspective schématique d'une cinquième forme de réalisation de la vis fusible de l'invention ;
- la figure 7 représente une vue en perspective schématique d'une sixième forme de réalisation de la vis fusible de l'invention ;
- la figure 8 représente une vue en perspective schématique d'une septième forme de réalisation de la vis fusible de l'invention et
- la figure 9 représente une vue en coupe de profil schématique de la zone A du turboréacteur de la figure 1.

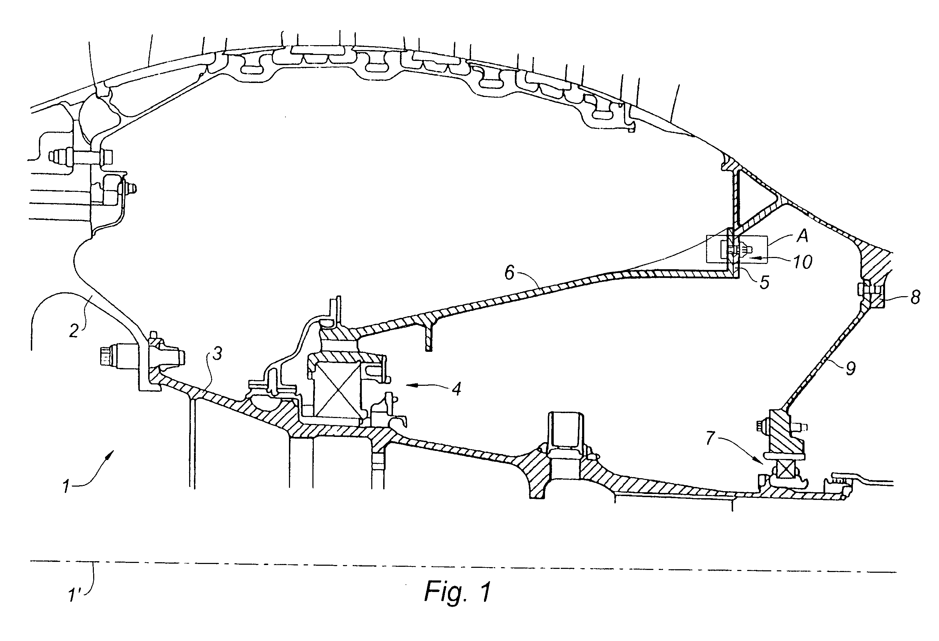

En référence à la figure 1, le turboréacteur 1 de l'invention comprend un rotor 2, nommé soufflante 2, fixée à un arbre d'entraînement 3 qui l'entraîne en rotation autour de l'axe 1' du turboréacteur. Cet arbre 3 est ici supporté par un premier palier 4, relié une première bride 5 de la structure fixe du turboréacteur 1 par une première pièce 6 support de palier, ci-après nommée premier support de palier 6, et un deuxième palier 7, relié à une deuxième bride 8 de la structure fixe du turboréacteur 1 par une deuxième pièce 9 support de palier, ci-après nommée deuxième support de palier 9. Le premier support de palier 6 est fixé à la première bride 5 par une pluralité de vis fusibles 10 longitudinales, dont une va maintenant être décrite.

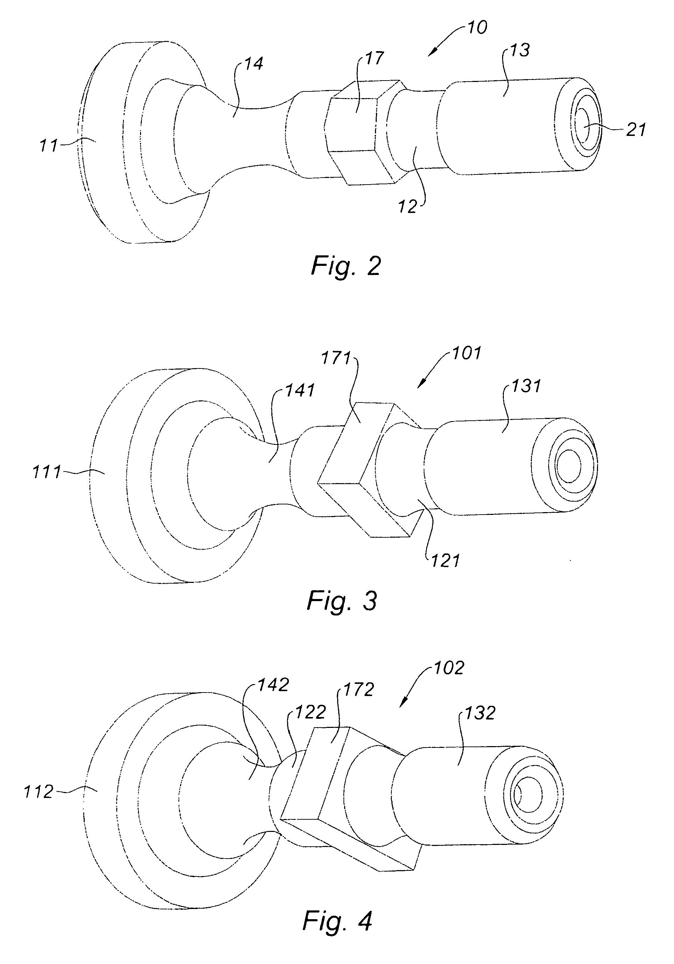

En référence à la figure 2, la vis fusible 10 comporte une tête 11 et une tige 12. A l'opposé de la tête 11, la tige 12 comprend une portion filetée 13, dont le filetage n'est en l'occurrence pas représenté, destinée à coopérer avec un écrou. A proximité de la tête 11, la vis 10 comporte une portion fusible 14, formant une zone privilégiée de rupture en traction. La portion fusible 14 est ici obtenue par un amincissement du diamètre de la tige 12. Cette portion amincie 14 est moins résistante en traction que le reste de la tige et est calibrée de façon à casser sous l'effet d'une force de traction déterminée.

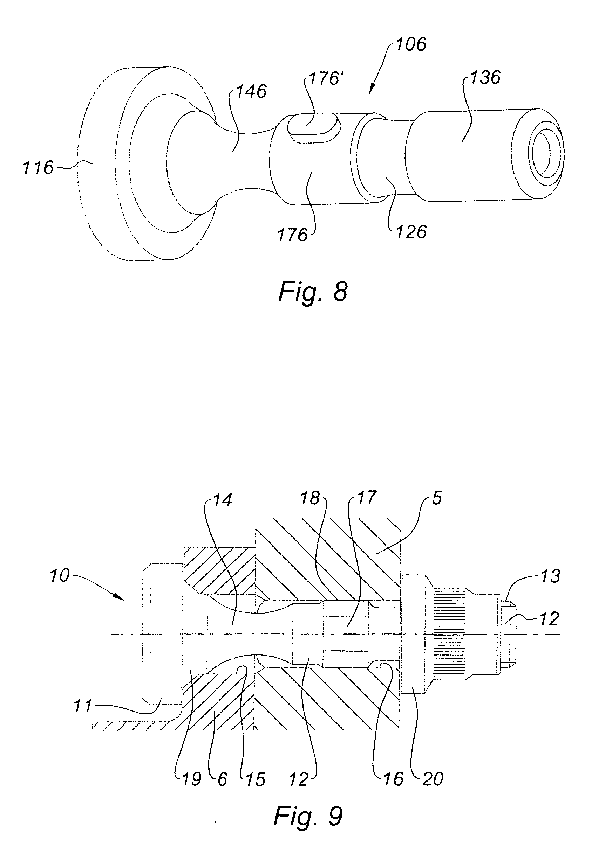

En référence à la figure 9, le premier support de palier 6 et la première bride 5 de la structure fixe du turboréacteur 1 comportent chacun un alésage 15, 16, respectivement, de passage de la vis fusible 10. Ainsi, la vis fusible 10 permet de participer à la fixation du premier support de palier 6 contre la première bride 5.

La vis fusible 10 comporte, entre sa portion fusible 14 et sa portion filetée 13, une portion 17 de blocage en rotation, destinée à coopérer avec une portion de blocage complémentaire 18 ménagée dans l'alésage 16 de la première bride 5. Dans la forme de réalisation de la figure 2, la portion de blocage en rotation 17 est une portion de section polygonale, ici hexagonale, c'est-à-dire une portion dont la surface extérieure forme les pans d'un prisme droit à base hexagonale. Le diamètre extérieur maximal de cette portion de blocage est ici maximal par rapport à l'ensemble des diamètres extérieurs de la tige 12 entre sa portion fusible 14 et sa portion filetée 13.

L'alésage 16 de la première bride 5 est également de section hexagonale dans sa portion de blocage complémentaire 18, qui représente au moins une partie de sa longueur dans laquelle la vis 10 est amenée à coulisser lors de son montage, afin de recevoir la portion de blocage 17 de la vis 10, avec un léger jeu nécessaire au montage.

Le montage de la vis fusible 10, afin de fixer le premier support de palier 6 et la première bride 5, va maintenant être expliqué, en référence à la figure 9.

Le premier support de palier 6 est plaqué contre la première bride 5, de telle sorte que leurs alésages 15, 16 de réception de la vis 10 soient coaxiaux. En l'espèce, le diamètre de l'alésage 15 du premier support de palier 6 est supérieur au diamètre de la première bride 5. La vis 10 est insérée, par son extrémité filetée 13, à partir de l'orifice libre de l'alésage 15 du premier support de palier 6, jusqu'à ce que sa tête 11 vienne en appui sur la face libre du premier support de palier 6, autour de l'orifice de son alésage 15. Le passage de la portion de blocage en rotation 17 de la vis 10 est possible, dans l'alésage 15 du premier support de palier 6, du fait du diamètre de ce dernier supérieur à celui de la portion de blocage 17, dans l'alésage 16 de la première bride 5, du fait de forme de la portion de blocage complémentaire 18 de cet alésage 16 dans laquelle la portion de blocage 17 peut coulisser, à la condition que la vis 10 soit convenablement orientée angulairement par l'opérateur.

En l'espèce, la vis 10 comprend, adjacente à sa tête 11, une portion de centrage 19 de diamètre correspondant à celui de l'alésage 15 du premier support de palier 6, dans lequel elle vient se loger.

Ainsi positionnée, la vis 10 est bloquée en rotation par sa portion de blocage 17 logée dans la portion de blocage complémentaire 18 ménagée dans l'alésage 16 de la première bride 5. L'opérateur rapporte alors un écrou 20 qu'il vient visser, à l'aide d'une clé, sur la portion filetée 13 de la vis 10, en saillie hors de l'alésage 16 de la première bride 5. Le couple de torsion induit par le serrage de l'écrou 20 est repris par la portion de blocage en rotation 17 de la vis 10 et transmis à la première bride 5 au niveau des pans de sa portion de blocage complémentaire 18, contre lesquels les pans de la portion de blocage 17 viennent en appui.

Grâce à l'invention, le serrage de l'écrou 20 sur la vis 10 est effectué sans l'aide d'une clé supplémentaire, la vis 10 étant bloquée en rotation, ce qui permet d'éliminer tous les inconvénients qui y sont liés. En outre, aucun couple de torsion n'est introduit dans la portion fusible 14 de la vis 10, puisque le couple de torsion est repris par la première bride 5 au niveau de la portion de blocage 17 de la vis 10, située entre son extrémité filetée 13 et sa portion fusible 14.

On peut noter, sur la figure 2, la présence d'un alésage borgne 21 à l'extrémité de la tige 12 de la vis 10 ; il s'agit en fait de l'empreinte de la pointe ou de la contre-pointe utilisée pour la confection de la vis 10.

Le premier support de palier 6 est monté contre la première bride 5 à l'aide d'une pluralité de vis fusibles 10 semblables à celle qui vient d'être décrite. Ainsi, en cas par exemple de rupture d'une aube de la soufflante 2 lors du fonctionnement du turboréacteur 1, il s'ensuit un balourd sur son arbre d'entraînement 3, qui se traduit au niveau des vis fusibles 10 par des efforts de traction, transmis par le biais du premier support de palier 6 qui transforme le balourd radial en efforts longitudinaux. Si le balourd est trop important, les vis fusibles 10 cassent, dans leur portion fusible 14, et permettent le découplage du premier palier 4 par rapport à la structure fixe du turboréacteur 1, évitant de la sorte la transmission des contraintes liées au balourd à cette structure. En l'espèce, on voit qu'il n'est pas prévu de dispositif de découplage entre le support du deuxième palier 9 et la deuxième bride 8.

Il existe d'autres formes de réalisation possibles de la vis fusible de l'invention, dont certaines vont maintenant être décrites. Les différences entre ces formes de réalisation portent sur la forme de la portion de blocage en rotation. Toute autre forme peut être envisagée, tant qu'elle assure une fonction de coopération avec une portion de blocage complémentaire ménagée dans un alésage de l'une des pièces traversées par la vis afin de bloquer cette dernière en rotation.

En référence à la figure 3, selon une deuxième forme de réalisation, la vis fusible 101 comporte une tête 111 et une tige 121. A l'opposé de la tête 111, la tige 121 comprend une portion filetée 131, dont le filetage n'est en l'occurrence pas représenté, destinée à coopérer avec un écrou. A proximité de la tête 111, la vis 101 comporte une portion fusible 141, formant une zone privilégiée de rupture en traction, ici obtenue par un amincissement du diamètre de la tige 121. La vis fusible 101 comporte, entre sa portion fusible 141 et sa portion filetée 131, une portion 171 de blocage en rotation, destinée à venir coopérer avec une portion de blocage complémentaire ménagée dans un alésage de l'une des pièces que la vis fusible 101 est destinée à fixer. La portion de blocage en rotation 171 est une portion de section polygonale, ici carrée, c'est-à-dire une portion dont la surface extérieure forme les pans d'un prisme droit à base carrée. Le diamètre extérieur maximal de cette portion de blocage est ici maximal par rapport à l'ensemble des diamètres extérieurs de la tige 101 entre sa portion fusible 141 et sa portion filetée 131.

En référence à la figure 4, selon une troisième forme de réalisation, la vis fusible 102 comporte une tête 112 et une tige 122. A l'opposé de la tête 112, la tige 122 comprend une portion filetée 132, dont le filetage n'est en l'occurrence pas représenté, destinée à coopérer avec un écrou. A proximité de la tête 112, la vis 102 comporte une portion fusible 142, formant une zone privilégiée de rupture en traction, ici obtenue par un amincissement du diamètre de la tige 122. La vis fusible 102 comporte, entre sa portion fusible 142 et sa portion filetée 132, une portion 172 de blocage en rotation, destinée à venir coopérer avec une portion de blocage complémentaire ménagée dans un alésage de l'une des pièces que la vis fusible 102 est destinée à fixer. La portion de blocage en rotation 172 est une portion de section polygonale, ici rectangulaire, c'est-à-dire une portion dont la surface extérieure forme les pans d'un prisme droit à base rectangulaire. Le diamètre extérieur maximal de cette portion de blocage est ici maximal par rapport à l'ensemble des diamètres extérieurs de la tige 102 entre sa portion fusible 142 et sa portion filetée 132.

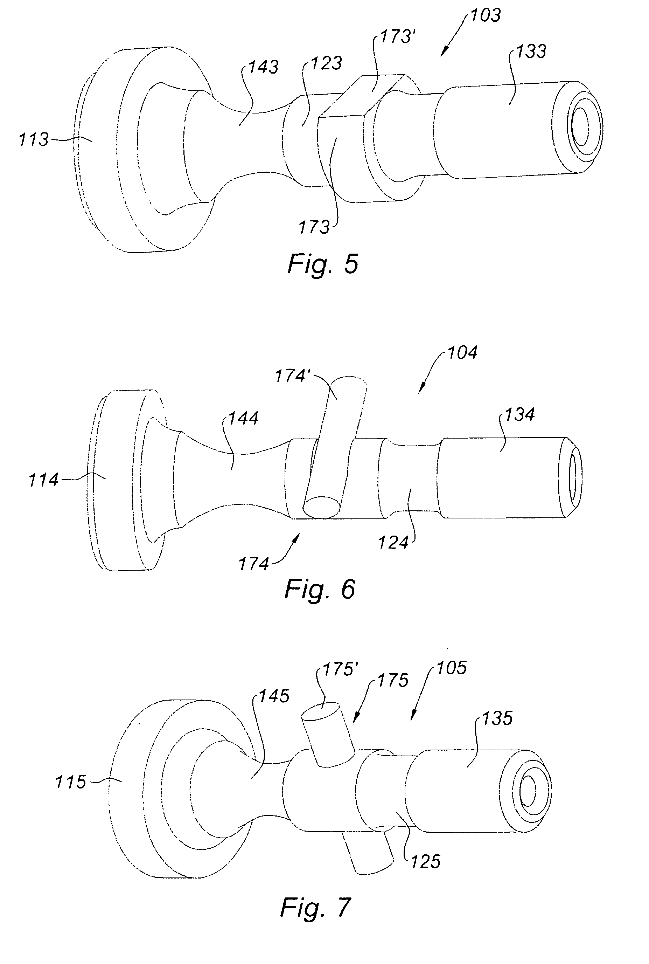

En référence à la figure 5, selon une quatrième forme de réalisation, la vis fusible 103 comporte une tête 113 et une tige 123. A l'opposé de la tête 113, la tige 123 comprend une portion filetée 133, dont le filetage n'est en l'occurrence pas représenté, destinée à coopérer avec un écrou. A proximité de la tête 113, la vis 103 comporte une portion fusible 143, formant une zone privilégiée de rupture en traction, ici obtenue par un amincissement du diamètre de la tige 123. La vis fusible 103 comporte, entre sa portion fusible 143 et sa portion filetée 133, une portion 173 de blocage en rotation, destinée à venir coopérer avec une portion de blocage complémentaire ménagée dans un alésage de l'une des pièces que la vis fusible 103 est destinée à fixer. La portion de blocage en rotation 173 est ici une portion de forme cylindrique, dont le diamètre est ici maximal par rapport à l'ensemble des diamètres extérieurs de la tige 103 entre sa portion fusible 143 et sa portion filetée 133, la surface de cette portion cylindrique comportant un méplat 173'. C'est ce méplat 173' qui assure la fonction de blocage en rotation de la portion de blocage 173, par coopération avec un méplat dans la portion de blocage complémentaire ménagée dans l'alés age de la pièce la recevant.

En référence à la figure 6, selon une cinquième forme de réalisation, la vis fusible 104 comporte une tête 114 et une tige 124. A l'opposé de la tête 114, la tige 124 comprend une portion filetée 134, dont le filetage n'est en l'occurrence pas représenté, destinée à coopérer avec un écrou. A proximité de la tête 114, la vis 104 comporte une portion fusible 144, formant une zone privilégiée de rupture en traction, ici obtenue par un amincissement du diamètre de la tige 124. La vis fusible 104 comporte, entre sa portion fusible 144 et sa portion filetée 134, une portion 174 de blocage en rotation, destinée à venir coopérer avec une portion de blocage complémentaire ménagée dans un alésage de l'une des pièces que la vis fusible 104 est destinée à fixer. La portion de blocage en rotation 174 est ici une portion de forme cylindrique, comportant une tige 174' rapportée de façon tangentielle sur sa surface, dans un logement prévu à cet effet. Les dimensions transversales de la tige rapportée 174' sont ici supérieures à l'ensemble des diamètres extérieurs de la tige 104 entre sa portion fusible 144 et sa portion filetée 134. La portion de la tige rapportée 174' en saillie hors de la tige 124 de la vis 104 est en l'espèce destinée à être reçue dans une rainure ménagée à cet effet dans l'alésage de la pièce la recevant.

En référence à la figure 7, selon une sixième forme de réalisation, la vis fusible 105 comporte une tête 115 et une tige 125. A l'opposé de la tête 115, la tige 125 comprend une portion filetée 135, dont le filetage n'est en l'occurrence pas représenté, destinée à coopérer avec un écrou. A proximité de la tête 115, la vis 105 comporte une portion fusible 145, formant une zone privilégiée de rupture en traction, ici obtenue par un amincissement du diamètre de la tige 125. La vis fusible 105 comporte, entre sa portion fusible 145 et sa portion filetée 135, une portion 175 de blocage en rotation, destinée à venir coopérer avec une portion de blocage complémentaire ménagée dans un alésage de l'une des pièces que la vis fusible 105 est destinée à fixer. La portion de blocage en rotation 175 est ici une portion de forme cylindrique, comportant une tige 175' la traversant, dans un logement prévu à cet effet. Les dimensions transversales de la tige rapportée 175' sont ici supérieures à l'ensemble des diamètres extérieurs de la tige 105 entre sa portion fusible 145 et sa portion filetée 135. Les extrémités de la tige rapportée 175' en saillie hors de la tige 125 de la vis 105 sont destinées à être reçues dans deux rainures ménagées à cet effet dans l'alésage de la pièce la recevant.

En référence à la figure 8, selon une septième forme de réalisation, la vis fusible 106 comporte une tête 116 et une tige 126. A l'opposé de la tête 116, la tige 126 comprend une portion filetée 136, dont le filetage n'est en l'occurrence pas représenté, destinée à coopérer avec un écrou. A proximité de la tête 116, la vis 106 comporte une portion fusible 146, formant une zone privilégiée de rupture en traction, ici obtenue par un amincissement du diamètre de la tige 126. La vis fusible 106 comporte, entre sa portion fusible 146 et sa portion filetée 136, une portion 176 de blocage en rotation, destinée à venir coopérer avec une portion de blocage complémentaire ménagée dans un alésage de l'une des pièces que la vis fusible 106 est destinée à fixer. La portion de blocage en rotation 176 est ici une portion de forme cylindrique, comportant une clavette 176' en saillie sur sa surface, reçue dans un logement prévu à cet effet. Les dimensions transversales de la portion de blocage 176 au niveau de la clavette 176' sont ici supérieures à l'ensemble des diamètres extérieurs de la tige 106 entre sa portion fusible 146 et sa portion filetée 136. La portion de la clavette 176' en saillie hors de la tige 126 de la vis 106 est destinée à être reçue dans une rainure ménagée à cet effet dans l'alésage de la pièce la recevant.

La vis fusible de l'invention a été décrite, dans ses diverses formes de réalisation, avec une portion fusible obtenue par amincissement de sa section ; tout autre géométrie pourrait être envisagée, tant qu'elle assure une fonction de rupture en cas d'efforts déterminés.

En outre, l'invention a été décrite en lien avec un turboréacteur, mais elle s'applique à toute turbomachine comportant un dispositif de découplage d'au moins un palier de l'arbre d'entraînement de son rotor avec des vis fusibles, quelles que soient d'ailleurs les pièces reliées par les vis fusibles. Les vis fusibles peuvent notamment relier, outre une pièce support du palier et une pièce de la structure fixe de la turbomachine, d'autres pièces du turboréacteur, par exemple une pièce support d'un autre palier, les vis fusibles exerçant dans ce cas une fonction de découplage de deux paliers.

Dans tous les cas, la pièce comportant l'alésage dans lequel est ménagée une portion de blocage complémentaire à la portion de blocage de la vis de l'invention peut être n'importe quelle pièce traversée par la vis, c'est-à-dire soit le support de palier, soit la pièce de la structure fixe de la turbomachine à laquelle il est fixé, soit une autre pièce traversée par la vis.

La portion de blocage complémentaire ménagée dans un alésage peut être directement adjacente à l'alésage, comme dans les formes de réalisation décrites dans lesquelles il s'agit d'une section différente de l'alésage ou de rainures prévues sur ses parois, mais il peut également s'agir de toute structure complétant la portion de blocage de la vis. Par exemple, il peut s'agir d'un perçage, traversant l'alésage, dans lequel on vient insérer une tige formant la portion de blocage de la vis.

## Revendications

1. Vis fusible pour un dispositif de découplage entre une pièce (6) support de palier et la structure fixe (5) d'une turbomachine, qui comprend un rotor (2) avec au moins un palier (4) monté sur ladite pièce (6) support de palier, la vis traversant au moins un alésage (16) et comprenant une tête (11, 111, 112, 113, 114, 115, 116) et une portion filetée (13, 131, 132, 133, 134, 135, 136), une portion fusible (14, 141, 142, 143, 144, 145, 146) formant une zone privilégiée de rupture, située entre la tête de la vis et sa portion filetée, **caractérisée par le fait qu'**elle comprend, entre sa portion filetée et sa portion fusible, une portion de blocage (17, 171, 172, 173, 174, 175, 176) en rotation agencée pour coopérer avec une portion (18) de blocage complémentaire ménagée dans l'alésage (16).

2. Vis fusible selon la revendication 1, **caractérisée par le fait que** sa portion de blocage (17, 171, 172) est de section polygonale.

3. Vis fusible selon la revendication 1, **caractérisée par le fait que** sa portion de blocage (173) est de forme cylindrique avec un méplat (173').

4. Vis fusible selon la revendication 1, **caractérisée par le fait que** sa portion de blocage (174) est cylindrique avec une tige (174') tangentielle rapportée sur sa surface.

5. Vis fusible selon la revendication 1, **caractérisée par le fait que** sa portion de blocage (175) est cylindrique avec une tige (175') la traversant.

6. Vis fusible selon la revendication 1, **caractérisée par le fait que** sa portion de blocage (176) est cylindrique avec une clavette (176') en saillie hors de sa surface.

7. Dispositif de découplage entre une pièce (6) support de palier et la structure fixe (5) d'une turbomachine, qui comprend un rotor (2) avec au moins un palier (4) monté sur ladite pièce (6) support de palier, le dispositif comprenant au moins une vis fusible (10, 101, 102, 103, 104, 105, 106) selon la revendication 1.

8. Dispositif de découplage selon la revendication 7, dans lequel la vis fusible comporte les caractéristiques de la vis de l'une des revendications 2 à 6.

9. Turbomachine, comprenant un rotor (2) avec au moins un palier (4), monté sur une pièce (6) support de palier, ladite pièce (6) étant reliée à la structure fixe (5)
par un dispositif de découplage, comportant au moins une vis fusible (10, 101, 102, 103, 104, 105, 106) selon la revendication 1.

10. Turbomachine selon la revendication 9, dans laquelle la portion de blocage complémentaire est ménagée dans un alésage de la pièce support de palier.

11. Turbomachine selon la revendication 9, dans laquelle la portion (18) de blocage complémentaire est ménagée dans un alésage (16) d'une pièce (5) de la structure fixe de la turbomachine.

12. Turbomachine selon l'une des revendications 9 à 11, dans laquelle la vis fusible comporte les caractéristiques de la vis de l'une des revendications 2 à 6.

## Claims

1. A fusible screw for an uncoupling device between a bearing support part (6) and the fixed structure (5) of a turbine engine, which comprises a rotor (2) with at least one bearing (4) mounted on said bearing supporting part (6), the screw passing through at least one bore (16) and comprising a head (11, 111, 112, 113, 114, 115, 116) and a threaded portion (13, 131, 132, 133, 134, 135, 136), a fusible portion (14, 141, 142, 143, 144, 145, 146) forming a preferential failure area, located between the head of the screw and its threaded portion, **characterised by** the fact that it comprises, between its threaded portion and its fusible portion, a rotation-blocking portion (17, 171, 172, 173, 174, 175, 176) arranged for cooperating with a complementary blocking portion (18) provided in the bore (16).

2. The fusible screw according to claim 1, the blocking portion (17, 171, 172) of which has a polygonal section.

3. The fusible screw according to claim 1, the blocking portion (173) of which has a cylindrical shape with a flat spot (173').

4. The fusible screw according to claim 1, the blocking portion (174) of which is cylindrical with a stem (174') tangentially added onto its surface.

5. The fusible screw according to claim 1, the blocking portion (175) of which is cylindrical with a stem (175') passing through it.

6. The fusible screw according to claim 1, the blocking portion (176) of which is cylindrical with a key (176') protruding out of its surface.

7. An uncoupling device between a bearing supporting part (6) and the fixed structure (5) of a turbine engine, which comprises a rotor (2) with at least one bearing (4) mounted on said bearing supporting part (6), the device comprising at least one fusible screw (10, 101, 102, 103, 104, 105, 106) according to claim 1.

8. The uncoupling device according to claim 7, wherein the fusible screw includes the characteristics of the screw according to any of claims 2 to 6.

9. A turbine engine, comprising a rotor (2) with at least one bearing (4), mounted on a bearing supporting part (6), said part (6) being connected to the fixed structure (5) by an uncoupling device, including at least one fusible screw (10, 101, 102, 103, 0414, 105, 106) according to claim 1.

10. The turbine engine according to claim 9, wherein the complementary blocking portion is provided in a bore of the bearing supporting part.

11. The turbine engine according to claim 9, wherein the complementary blocking portion (18) is provided in a bore (16) of a part (5) of the fixed structure of the turbine engine.

12. The turbine engine according to any of claims 9 to 11, wherein the fusible screw includes the characteristics of the screw according to any of claims 2 to 6.

## Patentansprüche

1. Schmelzbare Schraube für eine Vorrichtung zum Entkoppeln zwischen einem Lagertragteil (6) und der ortsfesten Struktur (5) einer Turbomaschine, die einen Rotor (2) mit zumindest einem Lager (4) umfasst, das auf dem Lagertragteil (6) montiert ist, wobei die Schraube zumindest eine Bohrung (16) durchsetzt und einen Kopf (11, 111, 112, 113, 114, 115, 116) und einen Gewindeabschnitt (13, 131, 132, 133, 134, 135, 136) umfasst, wobei ein schmelzbarer Abschnitt (14, 141, 142, 143, 144, 145, 146) einen Sollbruchstellenbereich bildet, der sich zwischen dem Kopf der Schraube und ihrem Gewindeabschnitt befindet, **dadurch gekennzeichnet, dass** sie, zwischen ihrem Gewindeabschnitt und ihrem schmelzbaren Abschnitt, einen Verdrehsicherungsabschnitt (17, 171, 172, 173, 174, 175, 176) aufweist, der für das Zusammenwirken mit einem komplementären Sicherungsabschnitt (18) vorgesehen ist, der in der Bohrung (16) vorgesehen ist.

2. Schmelzbare Schraube nach Anspruch 1, **dadurch gekennzeichnet, dass** ihr Sicherungsabschnitt (17, 171, 172) einen polygonalen Querschnitt hat.

3. Schmelzbare Schraube nach Anspruch 1, **dadurch gekennzeichnet, dass** ihr Sicherungsabschnitt (173) eine zylindrische Form mit einer Abflachung (173') hat.

4. Schmelzbare Schraube nach Anspruch 1, **dadurch gekennzeichnet, dass** ihr Sicherungsabschnitt (174) zylindrisch ist, wobei ein Tangentialstift (174') an seiner Oberfläche befestigt ist.

5. Schmelzbare Schraube nach Anspruch 1, **dadurch gekennzeichnet, dass** ihr Sicherungsabschnitt (175) zylindrisch ist, wobei ihn ein Stift (175') durchsetzt.

6. Schmelzbare Schraube nach Anspruch 1, **dadurch gekennzeichnet, dass** ihr Sicherungsabschnitt (176) zylindrisch ist, wobei ein Zapfen (176') über seine Oberfläche vorspringt.

7. Vorrichtung zum Entkoppeln zwischen einem Lagertragteil (6) und der ortsfesten Struktur (5) einer Turbomaschine, die einen Rotor (2) mit zumindest einem Lager (4) umfasst, das auf dem Lagertragteil (6) montiert ist, wobei die Vorrichtung zumindest eine schmelzbare Schraube (10, 101, 102, 103, 104, 105, 106) nach Anspruch 1 umfasst.

8. Entkopplungsvorrichtung nach Anspruch 7, wobei die schmelzbare Schraube die Merkmale der Schraube nach einem der Ansprüche 2 bis 6 aufweist.

9. Turbomaschine, umfassend einen Rotor (2) mit zumindest einem Lager (4), das auf einem Lagertragteil (6) montiert ist, wobei das Teil (6) mit der ortsfesten Struktur (5) durch eine Entkopplungsvorrichtung verbunden ist, die zumindest eine schmelzbare Schraube (10, 101, 102, 103, 104, 105, 106) nach Anspruch 1 aufweist.

10. Turbomaschine nach Anspruch 9, wobei der komplementäre Sicherungsabschnitt in einer Bohrung des Lagertragteils vorgesehen ist.

11. Turbomaschine nach Anspruch 9, wobei der komplementäre Sicherungsabschnitt (18) in einer Bohrung (16) eines Teils (5) der ortsfesten Struktur der Turbomaschine vorgesehen ist.

12. Turbomaschine nach einem der Ansprüche 9 bis 11, wobei die schmelzbare Schraube die Merkmale der Schraube nach einem der Ansprüche 2 bis 6 aufweist.
